# EUROPÄISCHE PATENTANMELDUNG

(11) **EP 0 573 919 A2**
(43) Veröffentlichungstag der Anmeldung: **15.12.1993**
(21) Anmeldenummer: 93109039.3
(22) Anmeldetag: 04.06.1993
(51) Int. Cl.: H04N 5/44, H04N 5/63

(54) **Empfangsgerät für Hochfrequenzsignale**

(30) Priorität: 09.06.1992 DE 4218901
(71) Anmelder: SIEMENS AKTIENGESELLSCHAFT, D-80333 München (DE)
(72) Erfinder: Dangschat, Rainer, Dipl.-Ing. (FH), W-8011 Landsham (DE)

(57) **Zusammenfassung**

Ein Empfangsgerät wie z.B. ein Fernsehapparat enthält einen nicht- flüchtigen Speicherbereich, in dem ein Betriebsartenkennzeichen, das anzeigt, ob das Empfangsgerät in einer Stand-By-Betriebsart oder in einer Vollbetriebsart betrieben wird, abspeicherbar ist. Damit ist es möglich, daß sich das Empfangsgerät nach Ende eines Netzausfalls, gesteuert beispielsweise durch einen im Gerät sowieso vorhandenen Mikroprozessor, automatisch wieder in diejenige Betriebsart schaltet, in der es sich vor dem eingetretenen Netzausfall befand. Dies erhöht den Bedienungskomfort für den Benutzer und vereinfacht die Herstellung des Gerätes, weil dadurch weniger Hardware-Bauteile gegenüber einem Gerät nach dem Stande der Technik nötig sind.

## Beschreibung

Die Erfindung betrifft ein Empfangsgerät für Hochfrequenzsignale nach dem Oberbegriff des Patentanspruches 1.

Gattungsgemäße Empfangsgeräte wie z.B. Fernsehgeräte sind heutzutage üblicherweise mittels Fernbedienung steuerbar. Ein solches Empfangsgerät weist zwei mögliche Betriebsarten auf, nämlich eine sogenannte Stand-By-Betriebsart und eine Vollbetriebsart. Während das Empfangsgerät in der Vollbetriebsart in vollem Umfang betrieben wird, d.h. also z.B., Empfangen der Hochfrequenzsignale eines Senders, Umwandeln in optisch und/oder akustisch wahrnehmbare Signale und Abstrahlen derselben, ist das Empfangsgerät in der Stand-By-Betriebsart abgeschaltet bis auf ein zum Empfang möglicher Fernbedienunsbefehle vorhandenes Fernbedienungsempfangsteil samt dazu notwendiger Spannungsversorgungsteile. Ein solches Empfangsgerät ist darüber hinaus auch mittels eines Netzschalters gänzlich abschaltbar, so daß im abgeschalteten Zustand keine der beschriebenen Betriebsarten vorliegt.

Empfangsgeräte der oben beschriebenen Art sollen zum einen möglichst benutzerfreundlich sein. Sie sollen aber andererseits möglichst betriebssicher sein. Deshalb soll sich zwar einerseits beim manuellen Einschalten des Empfangsgerätes mittels des Netzschalters aus dem ausgeschalteten Zustand heraus dieses in den Vollbetrieb schalten, aber andererseits darf das Empfangsgerät (bei eingeschaltetem Netzschalter) dann nicht den Vollbetrieb aufnehmen, wenn es erstmals oder erneut mit Netzspannung versorgt wird. Dieser letztere Fall kann eintreten, wenn der Benutzer, ohne den Netzschalter auszuschalten, den Netzstecker vom Spannungsnetz trennt oder wenn am Spannungsnetz eine Spannungsunterbrechung auftritt. Das Empfangsgerät darf in einem solchen Fall bei Wiederanlegen der Netzspannung an das Gerät deshalb nicht in Vollbetrieb gehen, sondern nur in Stand-By-Betrieb, weil einerseits nur im Stand-By-Betrieb ein Höchstmaß an Betriebssicherheit gewährleistet ist und weil andererseits ein Vollbetrieb mindestens dann unerwünscht ist, wenn niemand auf das Empfangsgerät Einfluß nehmen kann, falls eine Störung auftreten sollte oder wenn ungünstige Betriebsbedingungen herrschen sollten (z.B. Fernsehgerät ist wieder in Schrankwand verschlossen; Gefahr eines Hitzestaus) oder falls der Ton stören sollte oder weil durch unerwünschten Betrieb unnötig Strom verbraucht würde.

Dieses Problem wird bislang mittels eines am Netzschalter angebrachten Wischkontaktes, d.h. mittels eines temporär wirksamen Kontaktes, sowie einer zugehörigen Auswerteschaltung gelöst. Die Auswerteschaltung enthält meist zwei Widerstände, einen Kondensator und einen Transistor. Sie ist einerseits mit dem Wischkontakt verbunden und andererseits mit einem das Empfangsgerät steuernden Mikroprozessor. Aus Sicherheitsgründen müssen sowohl der Wischkontakt als auch Verbindungsleitungen zum Mikroprozessor hin hochspannungsfest ausgelegt sein, d.h. es muß eine Spannungsfestigkeit von mindestens 4kV garantiert sein.

Die Funktion ist folgende: Ist der Netzschalter zunächst ausgeschaltet, so ist das Empfangsgerät bekanntlich spannungslos. Beim Einschalten, d.h. beim Betätigen des Netzschalters (ein Einschalten über Fernbedienung ist nicht möglich, da das Empfangsgerät, und somit die Fernbedienungsempfangsschaltung, spannungslos sind) wird gleichzeitig auch der Wischkontakt betätigt. Wegen der Betätigung des Wischkontaktes geht das Empfangsgerät in die Vollbetriebsart und empfängt je nach Auslegung des Empfangsteiles entweder das Programm Nr. 1 (fest eingestellt) oder das zuletzt, d.h. vor Ausschalten des Empfangsgerätes, empfangene Programm ("Last station memory").

Ist jedoch zwar der Netzschalter eingeschaltet, das Empfangsgerät aber aus anderen Gründen spannungslos (z.B. weil der Netzstecker gezogen ist oder weil Spannungsausfall im Spannungsnetz herrscht), dann wird bei Wiederanlegen der Spannung an das Empfangsgerät (z.B. Verbinden des Netzsteckers mit dem Spannungsnetz oder Ende des Spannungsausfalls am Netz) der Wischkontakt nicht betätigt (da ja der Netzschalter nicht betätigt wird). Dies erkennt der obengenannte Mikroprozessor über die genannte Auswerteschaltung; er schaltet das Empfangsgerät deshalb lediglich in die Stand-By-Betriebsart.

Diese Lösung erfüllt zwar sicherheitstechnische Vorschriften. Sie ist jedoch technisch und wirtschaftlich aufwendig (Wischkontakt, Auswerteschaltung). Aufgabe der vorliegenden Erfindung ist es, ein gattungsgemäßes Empfangsgerät so weiterzubilden, daß es trotz Beachtung der sicherheitstechnischen Vorschriften technisch weniger aufwendig und somit auch wirtschaftlicher fertigbar ist.

Diese Aufgabe wird gelöst mittels der kennzeichnenden Merkmale des Patentanspruches 1. Vorteilhafte Aus- und Weiterbildungen sind in Unteransprüchen gekennzeichnet.

Nachstehend wird die Erfindung näher erläutert:
Moderne Empfangsgeräte für Hochfrequenzsignale, beispielsweise Fernsehgeräte, weisen heutzutage unter anderem einen nicht-flüchtigen Speicherbereich auf, der zur Aufnahme von Grundeinstellungswerten (z.B. Lautstärke) und/oder von Einstellungswerten bezüglich der letzten Benutzung (z.B. zuletzt empfangenes Programm) dient. Erfindungsgemäß ist nun vorgesehen, daß das Empfangsgerät auch ein Betriebsartenkennzeichen umfaßt, welches die jeweils aktuelle Betriebsart kennzeichnet. Bei jedem Wechsel der Betriebsart wird das Betriebsartenkennzeichen so gesetzt, daß es der aktuellen Betriebsart, in die gewechselt wird, entspricht. Das Betriebsartenkennzeichen hat also stets entweder den Zustand "Stand-By-Betrieb" oder den Zustand "Vollbetrieb". Weiterhin enthält das Empfangsgerät eine Vorrichtung zum Speichern des Wertes des Betriebsartenkennzeichens in einem dafür reservierten Bereich des nicht-flüchtigen Speicherbereiches. Die Vorrichtung nimmt das Speichern jeweils dann vor, wenn die Betriebsart gewechselt hat (Stand-By-Betriebsart in Vollbetrieb oder umgekehrt) und wenn das Betriebsartenkennzeichen der neuen Betriebsart entspricht.

Wenn nun keine Netzspannung anliegt (sei es, weil der Benutzer das Gerät ausgeschaltet hat oder weil ein Netzausfall eintrat), so enthält der obengenannte reservierte Bereich des nicht-flüchtigen Speicherbereiches stets einen Wert, der dem zuletzt aktuellen Wert des Betriebsartenkennzeichens entspricht, und der somit der zuletzt aktuellen Betriebsart entspricht. Wird dann irgendwann später das Empfangsgerät wieder mit Netzspannung versorgt, so wertet der Mikroprozessor die gespeicherte, das Betriebsartenkennzeichen betreffende Information aus und schaltet das Empfangsgerät in die diesem Wert entsprechende Betriebsart.

Trat also der angenommene Netzausfall während der Stand-By-Betriebsart auf, so schaltet sich das Empfangsgerät nach Beendigung des Netzausfalles in die Stand-By-Betriebsart.

Trat hingegen der angenommene Netzausfall während der Vollbetriebsart auf, so schaltet sich das Empfangsgerät nach Beendigung des Netzausfalls in die Vollbetriebsart. Dies ist für den Benutzer besonders komfortabel, weil beispielsweise bei kurzfristigem Netzausfall während einer spannenden Film- oder Sportsendung das Empfangsgerät sofort nach Ende des Netzausfalles die Sendung weiterhin wiedergibt. Bei den Empfangsgeräten nach dem Stande der Technik würde sich hingegen das Empfangsgerät nach Ende des Netzausfalles lediglich in die Stand-By-Betriebsart schalten, so daß der Benutzer wesentlich mehr Aufmerksamkeit aufwenden muß, um feststellen zu können, ob der Netzausfall beendet ist (d.h., ob Stand-By-Betrieb vorliegt) oder nicht.

Tritt während der Vollbetriebsart jedoch ein Netzausfall auf, der so lange andauert, daß der Benutzer kein Interesse mehr an einer Fortsetzung des Empfangs hat, so sollte er allerdings das Gerät am Netzschalter ganz ausschalten, so daß sich das Gerät nicht automatisch mit Ende des Netzausfalls in die Vollbetriebsart schalten kann (Sicherheitsgründe). Dies ist dem Benutzer jedoch zumutbar, da er dafür den großen Vorteil erlangt, daß sich das Gerät bei Ende eines kürzeren Netzausfalls (was in der Praxis ja wesentlich häufiger vorkommt als ein längerer Netzausfall) automatisch in die Vollbetriebsart schaltet, was besonders bedienungsfreundlich ist.

Es ist nicht nur, wie bislang beschrieben, vorteilhaft, daß das erfindungsgemäße Empfangsgerät ein Fernsehgerät ist, sondern es ist weiterhin auch vorteilhaft, daß das Gerät ein Rundfunkempfangsgerät, beispielsweise auch als Bestandteil einer Stereoanlage, ist oder ein Videorekorder.

Im Falle eines Videorekorders ist es daher besonders vorteilhaft, wenn programmierte Daten bezüglich aufzunehmender Sendungen ebenfalls im nicht-flüchtigen Speicherbereich speicherbar sind. Dann gehen nämlich in dem Fall, in dem ein Netzausfall vor oder während einer aufzunehmenden Sendung auftritt, diese Daten nicht verloren. Dies ist insbesondere auch dann vorteilhaft, wenn weiterhin der Zustand des sogenannten "Timer"-Kennzeichens ("Timer on" = der Videorekorder soll eine Sendung zeit- und ggf. VPS-gesteuert zu gegebener Zeit aufnehmen; "Timer off" = keine solche Aufnahme gewünscht) auch im nicht-flüchtigen Speicherbereich abspeicherbar ist.

Dann ist mit Ende eines Netzausfalls der Betriebszustand vor Beginn des Netzausfalls vollständig wiederherstellbar: Wenn also der Videorekorder vor Netzausfall noch im Wartezustand bezüglich einer solchen gesteuerten Aufnahme war, geht er nach Ende des Netzausfalles wieder in diesen Wartezustand und prüft, ob die durch die programmierten Daten geschaffene Bedingung schon eingetreten ist. Trat der Netzausfall jedoch während einer solchen gesteuerten Aufnahme auf, so wird diese Aufnahme mit Ende des Netzausfalls fortgesetzt, bis die aufzunehmende Sendung beendet ist, d.h. bis die durch die programmierten Daten geschaffene Bedingung abgelaufen ist.

## Patentansprüche

1. Empfangsgerät für Hochfrequenzsignale, welches betreibbar ist in einer Stand-By-Betriebsart und in einer Vollbetriebsart, mit einem nicht-flüchtigen Speicherbereich,
**gekennzeichnet durch**
ein Betriebsartenkennzeichen zur Unterscheidung der beiden Betriebsarten und durch eine Vorrichtung zum Speichern des Betriebsartenkennzeichens im nicht-flüchtigen Speicherbereich.

2. Empfangsgerät nach Anspruch 1,
**dadurch gekennzeichnet,**
daß das Empfangsgerät ein Fernsehgerät ist.

3. Empfangsgerät nach Anspruch 1,
**dadurch gekennzeichnet,**
daß das Empfangsgerät ein Videorekorder ist.

4. Empfangsgerät nach Anspruch 3,
**dadurch gekennzeichnet,**
daß programmierte Daten bezüglich aufzunehmender Sendungen im nicht-flüchtigen Speicherbereich speicherbar sind.

5. Empfangsgerät nach Anspruch 4.
**dadurch gekennzeichnet,**
daß ein Timer-Kennzeichen im nicht-flüchtigen Speicherbereich speicherbar ist, wobei das Timer-kennzeichen dem Empfangsgerät dazu dient, je nach Zustand des Timer-Kennzeichens die programmierten Daten auszuwerten oder nicht auszuwerten.

6. Empfangsgerät nach Anspruch 1,
**dadurch gekennzeichnet,**
daß das Empfangsgerät ein Rundfunkempfangsgerät ist.
